# EUROPÄISCHE PATENTSCHRIFT

(11) **EP 3 015 001 B1**
(45) Veröffentlichungstag und Bekanntmachung des Hinweises auf die Patenterteilung: **13.03.2019**
(21) Anmeldenummer: 14190746.9
(22) Anmeldetag: 28.10.2014
(51) Int. Cl.: A23L 5/00, A23L 5/10, A23L 29/00, A23L 29/10, A23L 29/30, A23L 7/117, A23L 27/00, A23L 5/40, A23L 19/18, A23L 25/00, A23L 27/10, A23L 33/21, A23L 7/122, A23P 10/25, A23P 20/10, A23P 20/12, A23P 20/18, A23L 33/115

(54) **Essbare selbstklebende Partikel**
Edible selfadhesive particles
Particules autocollantes comestibles

(43) Veröffentlichungstag der Anmeldung: 04.05.2016
(73) Patentinhaber: Symrise AG, 37603 Holzminden (DE)
(72) Erfinder: Fahle, Jens, 37603 Holzminden (DE); Lindner, Ingo, 37603 Holzminden (DE); Henze, Thomas, 37603 Holzminden (DE); Sabater, Christoph, 37603 Holzminden (DE); Elenschleger, Sergej, 37603 Holzminden (DE); Frank, Irene, 49377 Vechta (DE)
(74) Vertreter: Fabry, Bernd

(56) Entgegenhaltungen:
- GB-A- 1 499 591
- US-A- 5 298 268
- US-A1- 2005 095 328
- US-B1- 6 846 502
- US-B1- 7 070 822
- Anonymous: "Bac'n Pieces(TM) Bacon Flavored Bits | McCormick", http://www.mccormick.com, 31. März 2015 (2015-03-31), Seiten 1-2, XP055180454, Gefunden im Internet: URL:http://www.mccormick.com/Spices-and-Fl avors/Other/Bacn-Pieces-Bacon-Flavored-Bit s [gefunden am 2015-03-31]
- SILVIA MALLIA ET AL: "Aroma-active compounds of butter: a review", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 226, no. 3, 23 January 2007 (2007-01-23), pages 315-325, XP019584946, ISSN: 1438-2385

## Beschreibung

### GEBIET DER ERFINDUNG

Die vorliegende Erfindung betrifft selbstklebende essbare Partikel zum Aufbringen und Ankleben auf die Oberfläche von Lebensmitteln bzw. Nahrungsmitteln. Ferner betrifft die Erfindung ein Verfahren zur Herstellung von Lebensmitteln enthaltend die erfindungsgemäßen selbstklebenden essbaren Partikeln.

### STAND DER TECHNIK

Bei zum Verzehr geeigneten Waren (Lebensmitteln) ist es häufig erwünscht, essbare Partikel an, in oder auf dem Lebensmittel zu fixieren. Diese Partikel können der Dekoration, der Verbesserung der äußeren Erscheinung dienen oder auch die sensorischen Eigenschaften des Lebensmittels beeinflussen, und beispielsweise auch zum Geschmacksprofil beitragen, wie z.B. bei Chips.

Das Aufbringen von Partikeln an und auf Lebensmitteln erfolgt typischerweise durch Stärke, Zuckeralkohol, zuckerhaltige Fixierungsmittel (Klebemasse), wie beispielweise Glasuren oder durch fetthaltige Fixierungsmittel, wie beispielweise Fettüberzüge (Fettcoatings). Zuckerhaltige Fixierungsmittel weisen jedoch zugleich eine deutliche Süße auf und beeinflussen damit den Geschmack des Lebensmittels stark, zudem ist die Verwendung von zuckerhaltigen Fixierungsmittel vor allem im Bereich von diätischen Lebensmitteln wegen ihrer zusätzlichen kalorischen Werte nicht erwünscht. Fetthaltige Fixierungsmittel verleihen dem Lebensmittel einen höheren Fettgehalt, was insbesondere bei fettreduzierten oder fettarmen Lebensmitteln nachteilig ist. Darüber hinaus verändert sich mit steigendem Fettgehalt auch der Geschmack des Lebensmittels.

Essbare partikuläre Klebemassen zum Aufbringen auf Nahrungsmitteln sind beispielsweise in WO 02/091864 A1 beschrieben. Der dortige essbare Kleber basiert auf einer Zusammensetzung aus modifizierter Stärke, Maltodextrin, essbaren Tensiden und Polysacchariden. Der Klebstoff weist eine Kohäsionskraft von 215 g/s bis 700 g/s auf und hat eine Viskosität von nicht mehr als 800 cps.

In US 6,846,502 B1 wird eine essbare hochschmelzende wasserfreie Zusammensetzung aus (20 bis 30 Gew.%) Stärke und Weichmacher als Klebemasse beschrieben, um partikuläre Additive wie Aroma und / oder Farbstoffe an Lebensmitteln anzukleben.

In US 4,981,707 wird ebenfalls ein essbarer Kleber, insbesondere zur Anwendung bei der Produktion von gerösteten Nüssen mit einem bestimmten aromatischen Belag, aus Dextrin und einem geringen Anteil an Gummi, welches Xanthan, Carboxymethylcellulose oder Mischungen daraus ist, beschrieben.

Aus US 5,827,553 sind essbare Nahrungsmittelkleber bekannt, die fettfrei und ölfrei sind und deren Zusammensetzung Stärkehydrolysate mit einem Dextrose Äquivalentwert von 4-38 und einem molekularen Gewicht von 400 bis 4000 sowie Alkohole mit 1 bis 4 Hydroxylgruppen, polymerisiertes Glycol mit einem durchschnittlichen Molekulargewicht von 200 bis 9500 und einem Lösungsmittel, umfasst.

Zuckerbasierende essbare Kleber, die durch Reaktion von Zucker mit polyfunktionalen Säuren erhältlich sind, werden in US 6,613,378 B1 offenbart.

In EP 0722273 B1 wird ein essbares Haftmittel aus einer zumindest teilweise amorphen Form einer Mischung von zumindest einem Monosaccharid und zumindest einem aliphatischen, gesättigten Polyalkohol mit drei bis sechs Kohlenstoffatomen beschrieben.

Ein essbarer Kleber zum Aufbringen von Aromen auf Nahrungsmitteln wird in US 4,738,865 beschrieben, welcher aus Wasser, Lactose und Maltodextrin zusammengesetzt ist.

Die Aufgabe der vorliegenden Erfindung bestand daher darin, ein neues Adhesionssystem zu finden, das lebensmittrechtlich konform ist, um essbare Partikel auf Lebensmittel aufzubringen und darauf zu fixieren. Insbesondere sollte das neue Adhesionssystem (Fixierungsmittel) keinen oder einen definierten Eigengeschmack aufweisen und eine gute Fixierung der Partikel ermöglichen. Zudem war es Aufgabe der Erfindung ein essbares Adhesionssystem zu finden, das eine leichte und präzise Fixierung ermöglicht und lagerstabil ist.

Auch sollte das neue essbare Adhesionssystem nach der Anwendung auf dem Produkt keine Klebrigkeit mehr aufweisen, damit kein unerwünschtes Verkleben des Produktes aneinander erfolgt. Ferner sollte das neue Adhesionssystem eine möglichst verbesserte Prozessökonomie aufweisen.

### BESCHREIBUNG DER ERFINDUNG

Gegenstand der vorliegenden Erfindung ist die Verwendung von Partikeln, mit einer durchschnittlichen Partikelgröße von 0,1 bis 50mm, die aus einer Matrix bestehen, die die folgenden Komponenten umfasst:
(a) 0.001 Gew.-% bis 20 Gew.-% Aromastoffe,
(b) 40 Gew.-% bis 90 Gew.-% Stärkeabbauprodukte, Stärke oder modifizierte Stärke,
(c) 0 Gew.-% bis 10 Gew.-% Emulgatoren,
(d) 0.001 Gew.-% bis 20 Gew.-% Farbstoffe,
(e) 0 Gew.-% bis 10 Gew.-% Faserstoffe,
(f) 0 Gew.-% bis 5 Gew.-% Wasser,
(g) 0 Gew.-% bis 20 Gew.-% Gewürze, Gewürzextrakte und andere pulverförmige Lebensmittel, mit der Maßgabe, dass (a) sich die einzelnen Bestandteile der Zusammensetzung zu 100 Gew.-% addieren, und (b) die Partikel einen schmelzbaren Anteil aufweisen, der nicht unter 3 Gew.-% liegt, als Adhäsionssystem zum Aufbringen und Ankleben von Additiv-Partikeln auf die Oberfläche von Lebensmitteln.

Überraschenderweise wurde ein Adhesionssystem in Form von Partikeln gefunden, bestehend aus den oben genannten Komponenten a) bis h), das essbar und gleichzeitig selbstklebend ist. Die erfindungsgemäßen essbaren Partikel sind besonders vorteilhaft, da sie selbstklebend sind, und durch ihre Partikelform eine optimierte und punktuelle Fixierung der Partikeln auf das Nahrungsmittel, auf welchem sie aufgebracht werden sollen, ermöglichen. Die Partikeln werden hierzu, während der Fixierung, also dem Aufbringen und Ankleben auf das Lebensmittel, erst einmal angewärmt bzw. erwärmt, so dass die Partikeln angeschmolzen vorliegen, bevor sie mit dem Nahrungsmittel in Kontakt gebracht werden. Die Verklebung erfolgt dann an der/den angeschmolzenen Stelle(n) der Partikeln auf das Nahrungsmittel. Ein weiterer Vorteil hierbei ist, dass ein aktiver Kühlungsschritt nach dem Aufkleben in der Regel nicht mehr erforderlich ist. Man lässt das Produkt einfach nach der erfolgreichen Fixierung (langsam) abkühlen.

### AROMASTOFFE

Geeignete Aromastoffe für die Herstellung der Partikel der vorliegende Erfindung sind vorzugsweise zu finden in z.B. "Riechstoffe", in Steffen Arctander, in "Perfume and Flavor Chemicals", Eigenverlag, Montclair, N. J. 1969; H. Surburg, J. Panten, in "Common Fragrance and Flavor Materials", 5th Edition, Wiley-VCH, Weinheim 2006. Es seien beispielsweise genannt: Ester (gesättigt oder ungesättigt) wie z. B. Ethylbutyrat, Allylcapronat, Benzylacetat, Methylsalicylat; organische Säuren (gesättigt und ungesättigt) wie z. B. Buttersäure, Essigsäure, Methylbuttersäure, Capronsäure; Alkohole (gesättigt und ungesättigt) wie z. B. Ethanol, Propylenglykol, Octenol, cis-3-Hexanol, Benzylalkohol, Phenylethylalkohol; Aldehyde (gesättigt und ungesättigt) wie z. B. Acetaldehyd, Isobutyraldehyd, Nonadienal, Benzaldehyd, 3-Phenylacetaldehyd; Ketone wie z. B. Menthon; Ether wie z. B. 4-Hydroxy-5-methylfuranon, 3-Hydroxy- 4,5-dimethyl-2-(5H)-furanon, 2,5-Dimethyl-3-hydroxy-2(3H)-furanon, 2(5)-Ethyl-4- hydroxy-5(2)-methyl-3(2H)-furanon, p-Methoxybenzaldehyd, Guajacol, Methoxyvinylphenol; Acetale wie z. B. Acetaldehyddiethylacetal; Lactone wie z. B. gamma- Decalacton; Terpene wie z. B. Limonen, Linalool, Terpinen, Terpineol, Citral (Geranial und Neral), Menthol; Sulfide und Disulfide wie z. B. Dimethylsulfid, Difurfuryldisulfid, Methylthiopropanal; Thiole wie z. B. Methylfuranthiol; Pyrazine und Pyrroline wie z. B. Methylpyrazin, Acetylpyrazin, 2-Propionylpyrrolin, 2-Acetylpyrrolin, Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Füllstoffe

Als Füllstoffe für die Herstellung der zu erfindungsgemäß verwendenden Partikeln geeignet sind Stärkeabbauprodukte, wie Dextrine, Stärke oder modifizierte Stärke.

### Emulgatoren

Als Emulgatoren für die Herstellung der zu erfindungsgemäß verwendenden Partikeln geeignet sind vorzugsweise Monoglyceride, Diglyceride und Lecithine.

Als Farbstoffe für die Herstellung der zu erfindungsgemäß verwendenden geeignet sind vorzugsweise färbende Lebensmittel wie Rote Bete etc., natürliche Farbstoffe wie Chlorophyll, naturidentische Farbstoffe.

### Faserstoffe

Geeignete Faserstoffe für die Herstellung der zu erfindungsgemäß verwendenden Partikeln sind vorzugsweise Pflanzenfaser, wie beispielsweise Apfel-, Citrus, Hafer- Kartoffel-, Zwiebel- und Weizenfasern.

### GEWERBLICHE ANWENDBARKEIT

Besonders vorteilhaft ist, dass die zu erfindungsgemäß verwendenden essbaren Partikeln selbstklebend sind, so dass durch die Verwendung der erfindungsgemäßen essbaren Partikeln, ein Verfahrensschritt eingespart werden kann. So wird zumeist im Stand der Technik, erst das Fixierungsmittel (Adhesionsmittel) und dann die zu verklebenden Additiv-Partikeln zum Nahrungsmittel zugegeben, um die Additive auf das Lebensmittel zu verkleben. In der vorliegenden Erfindung konnte durch das neu gefundene Adhesionssystem ein neues Klebe-Konzept entwickelt werden. Es werden selbstklebende essbare Additiv-Partikeln hergestellt, die keine gesonderten Fixierungsmitteln mehr benötigen, so dass ein Verfahrensschritt in der Produktionslinie von derartigen Lebensmitteln eingespart werden kann.

Ein weiterer Aspekt der vorliegenden Erfindung ist daher die Verwendung der oben genannten selbstklebenden essbaren Partikel als Adhesionssystem zum Aufbringen und Ankleben von Additiv-Partikeln auf die Oberfläche von Nahrungsmitteln bzw. Lebensmitteln.

Ebenfalls ist eine bevorzugte Ausführungsform die Verwendung der genannten selbstklebenden essbaren Partikel zur Fixierung von essbaren Partikeln auf Lebensmitteln.

Durch die vorliegende erfindungsgemäße Fixierung von Partikeln können in idealer Weise verbesserte oder neuartige Lebensmittelprodukte erhalten werden, insbesondere in optischer und/oder geschmacklicher Hinsicht. Auf Grund der erfindungsgemäß zu verwendenden selbstklebenden essbaren Partikel lassen sich völlig neue Kompositionen mit den unterschiedlichsten Partikeln zusammenstellen, die es erlauben, beim Verzehr der neuartigen Lebensmittelprodukte während des Verzehrs unterschiedliche Geschmackserlebnisse, gleichzeitig, aber insbesondere nacheinander, wahrzunehmen. Das Erscheinungsbild und das Geschmackserlebnis lassen sich daher beliebig variieren, insbesondere wenn Partikel mit unterschiedlichem Aroma und Aussehen auf dem Lebensmittel fixiert werden. So können mit den erfindungsgemäßen zu verwendenden selbstklebenden essbaren Partikeln beispielsweise pizzaartige Snacks hergestellt werden, welche sich durch eine neuartige Textur und eine neuartiges Erscheinungsbild und insbesondere durch ein mögliches verbessertes und neuartiges Geschmackserlebnis auszeichnen.

Der Begriff "essbare Partikel" ist breit zu verstehen, da die Natur der Partikel für die Funktion der Erfindung unkritisch ist und die Partikel lediglich danach ausgewählt werden, welche Geschmacksrichtung den Zubereitungen verliehen werden soll. Die Partikel können in Form und Größe in weiten Bereichen variiert werden, ebenso ist die Beschaffenheit, Zusammensetzung, Herstellung oder Herkunft unkritisch. Typischerweise liegt die Größe der Partikel im Bereich von 0,1 bis 50 mm, vorzugsweise im Bereich von 1 bis 30 mm und insbesondere im Bereich von 2 bis 5 mm. Bei den Partikeln kann es sich um geschmacksgebende oder geschmacksneutrale, farbige, gefärbte, farblose sowie transparente Partikel handeln.

In einer bevorzugten Ausführungsform der zu verwendenden selbstklebenden essbaren Partikel liegen die selbstklebenden essbaren Partikel vorzugsweise in Form von Pulver, Kompaktaten, Kapseln, Agglomeraten, Pressagglomeraten, Pellets, Aromakompaktaten, Extrudaten vor.

Die zu verwendenden selbstklebenden essbaren Partikel der vorliegenden Erfindung sind erhältlich durch Verfahren, die bereits aus dem Stand der Technik bekannt sind, wie vorzugsweise durch Extrusion, Düsen-Coextrusion, Schmelzextrusion, Spray-Chilling, Pressagglomeration, Schmelzgießen, Pellettierung, Tablettierung oder sonstige Granulationsprozesse.

Partikel, die nach den genannten Verfahren hergestellt werden, sind besonders vorteilhaft, da sie insbesondere für den erfindungsgemäßen Verwendungszweck gut einsetzbar sind, insbesondere da Form und Zusammensetzung der Partikel nach den unterschiedlichen Verfahren entsprechend nach Bedarf und Einsatzgebiet dadurch variabel einstellbar sind.

Die zu verwendenden selbstklebenden essbaren Partikel der vorliegenden Erfindung können beispielsweise aus einer extrudierten Schmelze hergestellt werden. Die Schmelze ist hierbei vorzugsweise eine aromatisierte Schmelze, in der flüchtige Aroma- und / oder Riechstoffe oder flüchtige Aroma- und / oder Riechstoffzusammensetzungen verteilt vorliegen. Als Trägermaterialien kommen hierbei vorzugsweise Sucrose, Glucose, Lactose, Fructose, Maltose, Ribose, Dextrose, Isomalt, Sorbitol, Mannitol, Xylitol, Lactitol, Malitol, Pentatol, Arabinose, Pentose, Xylose, Galactose, Trehalose ®, (hydrierter) Maissirup, Maltodextrin, Agar, Carrageen, Gummis, Polydextrose und Derivate und Mischungen davon in Frage. Die Herstellung solcher Partikeln sind beispielsweise aus EP 1 124 442 B1 oder EP 1 501 375 B1 bekannt. Die zu verwendenden selbstklebenden essbaren Partikel der vorliegenden Erfindung weisen vorzugsweise eine Glasübergangstemperatur zwischen 30°C bis 100°C und durchschnittliche Partikelgrössen von 0.6 bis 3.0 mm, auf. Es sind zumeist sphärische Granulate, die jedoch auch in Form von Nadeln erhältlich sind. Eine solche glasartige Matrix kann eine Aroma- bzw. Riechstoffbeladung von 3 Gew.% bis 10 Gew.%, vorzugsweise 4 Gew.% bis 8 Gew.% aufweisen. Die Aroma- bzw. Riechstoffbeladung kann nach Bedarf und Einsatzgebiet variabel eingestellt werden.

Vorzugsweise handelt es sich bei den zu verwendenden selbstklebenden essbaren Partikeln um Aromapartikeln mit einer Glasübergangstemperatur im Bereich von 30° bis 100°C.

In einer bevorzugten Ausführung handelt es sich bei den zu verwendenden selbstklebenden essbaren Partikeln um Partikel, die vorwiegend aus einer zuckerhaltigen Matrix bestehen. Vorzugsweise sind es dann Kompaktate, d.h. zusammengepresste Pulver. Als Trägermaterialien für die Kompaktakte werden bevorzugt Kohlenhydratverbindungen eingesetzt, die mit weiteren Inhaltstoffen beladen sein können, wobei das Granulat vorzugsweise eine Partikelgröße von 0.3 bis 5 mm, vorzugsweise 0.4 bis 3.2 mm aufweist. Ein erfindungsgemäß zu verwendendes Kompaktat weist vorteilhafterweise weniger als 7 Gew.%, vorzugsweise weniger als 5 Gew.% Wasser und weist von 3 Gew.% bis 30 Gew.% vorzugsweise von 4 Gew.% bis 25 Gew.%, besonders bevorzugt von 5 Gew.% bis 20 Gew.% Aroma- bzw. Riechstoffbeladung, auf. Bevorzugt können die erfindungsgemäß eingesetzten Kompaktate mit weiteren Additiven, wie beispielsweise Säuren, Vitamine, Ballaststoffen, Salzen etc. ausgerüstet sein, je nach Anwendungsbedarf und Einsatzgebiet.

In einer bevorzugten Ausführung handelt es sich bei den zu verwendenden selbstklebenden essbaren Partikeln um Granulate, die aus einem Granulierungsprozess hervorgehen, in dem eine Emulsion oder Dispersion der genannten Zusammensetzung in einem Rührkessel erhitzt wird, und anschließend das Gemisch durch vibrierende Düsen, wie aus einer Duschdüse, gepresst werden. Die so erhaltenen Tropfen fallen dann in ein Kühlbad oder Calcliumbad, je nach Anwendungsbedarf, und erstarren darin. Vorzugsweise bestehen Granulate, bzw, die so hergestellten Partikel, zum größten Teil aus einer Fett-Matrix.

In einer bevorzugten Ausführungsform umfasst ein essbares erfindungsgemäßes Fixierungsmittel eine Mischung von unterschiedlichen Komponenten a) (Aromastoffen). Vorzugsweise handelt es sich hierbei um Partikeln, die sich untereinander in ihrer Aroma- bzw. Riechstoffzusammensetzung unterscheiden.

Es hat sich ferner für das Ankleben der erfindungsgemäß zu verwendenden essbaren selbstklebenden Partikeln an ein Lebensmittel gezeigt, dass die Partikel einen bestimmten Anteil an Komponenten aufweisen sollten, die den schmelzbaren Anteil der Partikel bestimmen. Diese Komponenten sind vorzugsweise in den erfindungsgemäß zu verwendenden Partikeln der Gehalt an Stärkeabbauprodukten, Stärke oder modifizierter Stärke. Der schmelzbare Anteil eines erfindungsgemäß zu verwendenden Partikels hat Einfluss auf die Qualität der Fixierung der Partikel auf das Lebensmittel.

Demgemäß liegt der schmelzbare Anteil in einem zu erfindungsgemäß verwendenden Partikel nicht unter 3 Gew.%, bevorzugt nicht unter 5 Gew.%, ganz besonders bevorzugt nicht unter 8 Gew.%. Bei dieser Menge an schmelzbaren Komponenten kann eine gute Klebrigkeit und somit eine gute Haftung der Partikeln an das Lebensmittel erfolgen.

Weiterhin wurde gefunden, dass ein zu hoher Anteil an Stärke in den zu verwendenden Partikeln, insbesondere bei der Verwendung von Partikeln, die einen hohen Gehalt an Zuckerverbindungen aufweisen nachteilig ist. Bei einem zu hohen Gehalt an Stärke bei derartigen Partikeln, schmelzen die erfindungsgemäß zu verwendenden Partikeln sehr schlecht oder gar nicht an, so dass wenig oder gar keine Verklebungsstellen vorhanden sind, was wiederum zu einem schlechten Klebeergebnis führt.

Demgemäß liegt in einer bevorzugten Ausführungsform, der Anteil an Stärke, insbesondere bei der Verwendung von Partikeln, die einen hohen Gehalt an Zuckerverbindungen aufweisen, in den erfindungsgemäß zu verwendenden Partikeln vorzugsweise nicht über 60 Gew.%, bevorzugt nicht über 70 Gew.%, ganz besonders bevorzugt nicht über 90 Gew.%. Erfindungsgemäß zu verwendenden essbare Partikel können in ihre Form und Größe in weiten Bereichen variiert werden, ebenso ist die Beschaffenheit, Zusammensetzung, Herstellung oder Herkunft unkritisch.

Typischerweise liegt die Größe eines erfindungsgemäß zu verwendenden selbstklebenden essbaren Partikels, im Bereich von 0,1 bis 50 mm, da sie sich besonders als selbstklebende Partikeln eignen. In einer bevorzugten Ausführungsform weisen erfindungsgemäß zu verwendenden selbstklebende essbare Partikel eine durchschnittliche Partikelgröße von bevorzugt 0,1 bis 50 mm, besonders bevorzugt 0,1 bis 20 mm, ganz besonders bevorzugt 0,5 bis 5 mm, auf. Die hier aufgeführten Partikelgrößen sollen nicht einschränkend sein. Die Partikelgrößen werden nach Einsatzbedarf angepasst, so dass Partikel jeglicher Größen herstellbar und bevorzugt sind.

Bei den erfindungsgemäß zu verwendenden selbstklebenden essbaren Partikeln kann es sich um geschmacksgebende oder geschmacksneutrale, farbige, gefärbte, farblose sowie transparente Partikeln handeln. Die Partikeln weisen einen geringen Wassergehalt auf, so dass der Wassergehalt in einem Bereich von nicht mehr als 5 Gew.-% liegt.

Mit dem erfindungsgemäß zu verwendenden Partikeln gelingt problemlos eine gute Fixierung auch von größeren und schwereren Partikeln auf die Oberfläche von Lebensmitteln. Der Fixierungsgrad hängt nicht nur von der Menge der Partikel, sondern unter anderem auch von Form, Wassergehalt und Beschaffenheit der Partikel bzw. des Lebensmittels, ab. Ein weiterer Gegenstand der vorliegenden Erfindung ist insbesondere die Verwendung der erfindungsgemäß zu verwendenden Partikeln zur Fixierung von essbaren Partikeln auf Lebensmitteln, vorzugsweise zum Aufbringen und Ankleben von essbaren Partikeln auf die Oberfläche von Lebensmitteln.

Es ist bevorzugt, die erfindungsgemäß zu verwendenden Partikeln auf Lebensmitteln, vorzugsweise mit größeren Oberflächen aufzubringen. Typischerweise haben diese Lebensmittel eine Größe oberhalb von 5 mm, meist liegt die Größe im Bereich von 10 bis 200 mm.

Bevorzugt sind kohlenhydratreiche Produkte wie z. B. Mehl- oder Stärkeprodukte, insbesondere Backwaren, frittierte Lebensmittel oder getrocknete extrudierte Lebensmittel. Typischerweise werden die Partikel auf Gebäck, Dauerbackwaren oder Snacks wie beispielsweise Kräcker, Laugengebäck, Kekse, Kartoffel- oder Maischips (z.B. Tortilla-Chips), Weizenmehlprodukte, (z.B. Gebäckstangen, Croutons, Brotchipse, Zwieback, extrudierte und nichtextrudierte Knäckebrote) aufgebracht. Übliche Formen sind Dreiecke, Quadrate, Rechtecke, Trapeze, Kegel, Würfel, Quader, Zylinder, Spiralen, Stangen, Sphären, Scheiben, Streifen, Balken, Kreise, Kugeln, Ovale, Schalen, Pyramiden, Oktaeder, Prismen oder Ellipsen. Die Oberflächen können jedoch auch in sonstiger beliebiger Form vorliegen. Bei Snacks sind beispielsweise auch Tierformen wie Krokodile, Fische oder Kängurus denkbar.

Bevorzugt ist ein geringer Wassergehalt der Oberfläche, auf oder an der die Partikel fixiert werden. Vorteilhafterweise werden die Partikel auf getrocknete, gebackene oder frittierte Lebensmittel aufgebracht, die einen Wassergehalt von kleiner oder gleich 15 Gew.% aufweisen.

Demgemäß ist ein weiterer Gegenstand der vorliegenden Erfindung Nahrungsmittel bzw. Lebensmittel, umfassend die erfindungsgemäß zu verwendenden Partikeln. Hierbei ist in einer bevorzugten Ausführungsform das Nahrungsmittel bzw. Lebensmittel ausgewählt aus der Gruppe bestehend aus Chips, Tortilla Chips, Nussprodukte, French Fries, Brezeln, Snackmischungen, Crackers, Popcorn, Müsli, Biskuits, Cookies, extrudierte Snacks, Müsliriegel, Cerealien.

Der Begriff "Lebensmittel" bzw. "Nahrungsmittel" umfasst insbesondere Produkte, die gemäß der VERORDNUNG (EG) Nr. 178/2002 DES EUROPÄISCHEN PARLAMENTS UND DES RATES vom 28. Januar 2002 Lebensmittel sind. Gemäß dieser Verordnung sind "Lebensmittel" alle Stoffe oder Erzeugnis-se, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

Ein weiterer Gegenstand der vorliegenden Erfindung ist Verfahren zur Herstellung eines Lebensmittels mit selbstklebenden essbaren Partikeln, umfassend
(i) Bereitstellung von Partikel wie beschrieben in Anspruch 1,
(ii) Erwärmen der selbstklebenden essbaren Partikeln aus (i) auf eine Temperatur, bei der die Partikel anschmelzen,
(iii) Aufbringen der angeschmolzenen selbstklebenden essbaren Partikeln aus (ii) auf das Lebensmittel, ggf. in Gegenwart von weiteren Gewürzen,
so dass ein Lebensmittel erhalten wird, an dem essbare (Additiv)Partikel haften.

Hierbei kann, wie bereits oben beschrieben, eine Mischung aus unterschiedlichen selbstklebenden essbaren Partikeln, die sich in der Zusammensetzung der Komponenten a) bis h) unterscheiden als Adhesionssystem verwendet werden. Eine solche Anwendung ermöglicht die Fixierung von unterschiedlichen Additivkomponenten auf ein Lebensmittel.

Die Aufbringung der angeschmolzenen selbstklebenden essbaren Partikeln auf die Oberfläche des Lebensmittels, kann nach bekannten Verfahren wie beispielsweise Streuen, Sprühen, Gießen, Vorhanggießen, Aufschleudern, Streichen oder Tauchen erfolgen.

Der Anschmelzbereich der selbstklebenden essbaren Partikeln ist abhängig von der Größe, Form und Zusammensetzung der Partikeln. So können selbstklebenden essbaren Partikeln einen Anschmelzbereich von 70-150°C, bevorzugt von 80-140°C, besonders bevorzugt von 90-130°C aufweisen, aber auch einen Anschmelzbereich von 80-170°C, bevorzugt von 90-160°C, besonders bevorzugt von 100-150°C aufzeigen. Es gibt aber auch Partikel, die abhängig von ihrer Zusammensetzung einen Anschmelzbereich von 25-95°C, bevorzugt von 30-80°C, besonders bevorzugt von 35-70°C aufzeigen.

Ein weiterer Vorteil der vorliegenden Erfindung besteht darin, dass im erfindungsgemäßen Verfahren eine separate Abkühlung der Partikel eingespart werden kann. Demgemäß besteht ein weiterer Gegenstand der vorliegenden Erfindung darin, dass das erfindungsgemäße Verfahren zur Herstellung eines Lebensmittels mit selbstklebenden essbaren Partikeln, ein Einstufenprozeß ist, welches kontinuierlich oder diskontinuierlich durchgeführt werden kann.

Die Menge und Auf- bzw. Ausbringungsart der selbstklebenden essbaren Partikeln auf die Oberfläche des Lebensmittels kann in weiten Bereichen variiert werden, und wird je nach Produktbedarf durch Kontaktzeiten, Temperaturregulierung und angewendete Matrix gesteuert.

### BEISPIELE

### HERSTELLBEISPIELE

### Herstellung von erfindungsgemäßen Partikeln

Es werden Partikel A und Vergleichspartikel B mittels Walzen-Kompaktoren, der Firma Hosokawa Bepex GmbH hergestellt.

| | |
|---|---|
| Presskraft: | 1 - 20 kN/cm |
| Walzendrehzahl: | 1 - 30 rpm |
| Presspalt: | 1 - 6 mm |

Die Produktion der Granulate erfolgt bei Raumtemperatur. Hierzu wird die Pulvermischung der Inhaltsstoffe von Partikel A bzw. B über ein Trichtersystem auf den Spalt zwischen zwei rotierende Walzen gegeben, die das Pulver im Spalt mit einer gewissen Presskraft beaufschlagen, so dass aus dem Pulver eine zusammenhängende Schülpe entsteht. Diese Schülpe wird dann in einem Granulator unterhalb der Walzen zerkleinert. Die Größe der Granulate kann mittels eines Siebes eingestellt werden.

**Tabelle 1**

| Partikel A | |
|---|---|
| **Inhaltstoffe** | **Gew.-%** |
| Dextrin aus Mais | 77,82 |
| Mannitol | 10,00 |
| Monoglyceride | 1,10 |
| Trinkwasser | 2,00 |
| Käsepulver | 4,00 |
| Gewürzextrakte | 0,07 |
| Käsearoma-Komposition | 5,01 |
| Summe | 100,00 |

**Tabelle 2**

| Partikel B | |
|---|---|
| **Inhaltsstoffe** | **Gew.-%** |
| Tristearin | 60,00 |
| Lecithin | 5,00 |
| Trinkwasser | 5,00 |
| Polydextrose | 10,00 |
| Tomatenaroma-Komposition | 10,00 |
| Apfelfaser | 8,00 |
| Speisesalz | 2,00 |
| Summe | 100,00 |

### BEISPIEL 1

Partikel A wurde bei der Herstellung mit unterschiedlichen Gewürzen und Aromastoffen versetzt, so das selbstklebende essbare Partikel mit unterschiedlichen Geschmacksrichtungen erhalten wurden.

**Tabelle 3**

| Partikel A mit unterschiedlichen Gewürzmischungen | | | | | | |
|---|---|---|---|---|---|---|
| **Inhaltstoffe** | **Partikelmischung [Gew.-%]** | | | | | |
| | **1** | **2** | **3** | **4** | **5** | **6** |
| Tomate | 52 | 56 | 53 | - | - | - |
| Zwiebel | 21 | 14 | - | - | 56 | 20 |
| Cheddar-Käse | 17 | 21 | - | 29 | - | 20 |
| Green-Chili | 10 | 9 | - | - | - | 10 |
| Mozarella-Käse | - | - | 33 | 29 | - | - |
| Basilikum | - | - | 14 | - | - | - |
| Rindfleisch | - | - | - | - | 44 | 20 |
| Ketchup-Tomate | - | - | - | - | - | 30 |
| Parmesan-Käse | - | - | - | 29 | - | - |
| Red-Chili | - | - | - | 13 | - | - |

**Tabelle 4**

| Partikel A mit unterschiedlichen Gewürzmischungen | | | | | | |
|---|---|---|---|---|---|---|
| **Inhaltstoffe** | **Partikelmischung [Gew.-%]** | | | | | |
| | **7** | **8** | **9** | **10** | **11** | **12** |
| Tomate | - | - | - | - | - | - |
| Zwiebel | - | 57 | - | - | - | - |
| Cheddar-Käse | 32 | - | 31 | 30 | 30 | 30 |
| Green-Chili | 12 | - | 6 | | - | 20 |
| Mozarella-Käse | 32 | - | 31 | 30 | 30 | 30 |
| Basilikum | - | - | - | - | - | - |
| Rindfleisch | - | 43 | - | - | - | - |
| Ketchup-Tomate | - | - | - | - | - | - |
| Parmesan-Käse | 24 | - | 26 | 20 | 20 | 20 |
| Red-Chili | - | - | 6 | 20 | 20 | - |

### BEISPIEL 2: Aufbringen von essbaren Partikeln auf Lebensmitteloberfläche

Die in Beispiel 1 hergestellten Partikeln wurden auf Snacks appliziert. Dazu wurden die Snacks (Chips) in eine Applikationstrommel gegeben. Die Trommel bewegte sich mit einer Drehzahl von 8-15 Umdrehungen pro Minute. Die Füllmenge ist so zu wählen, dass eine gute Umwälzung der Snacks gewährleistet wird, jedoch ein Großteil der Trommeloberfläche bedeckt ist.

Nun wird anhand des Snack-Gewichtes und des gewünschten Auftrags die Masse der zu verwendenden Partikel errechnet. Hierbei geht man von einer Ausbeute von etwa 70 % aus. Die erfindungsgemäßen Partikel aus Tabelle 1 und 2 werden dann in einen Trichter gefüllt, der eine druckluftbetriebene, vibrierende Rüttelrinne speist. Eine Wärmequelle wird in die Applikationstrommel gerichtet und auf 620 °C voreingestellt. Der Austritt der heißen Luft ist senkrecht zur Fallstrecke der Partikel auszurichten. Der Antrieb der Rüttelrinne wird aktiviert. Es ist darauf zu achten, dass eine Vereinzelung der Partikel erfolgt. Der heiße Luftstrom schmilzt die Partikel an und befördert sie gleichzeitig auf die Snackoberfläche, wo sie klebend verbleiben. Ist der Speisetrichter entleert wird der Prozess beendet und die Snacks können entnommen werden.

**Tabelle 5**

| Produktbeladung nach Applikation auf die Oberfläche von Chips | | | | |
|---|---|---|---|---|
| **Partikelmischung** | **Chips [Gew.-%]** | **Partikel [Gew.-%]** | **Chips + Partikel nach Prozess [Gew.-%]** | **Anhaftung[%]** |
| **1** | 83,3 | 16,7 | 94,8 | 69,0 |
| **2** | 83,4 | 16,6 | 92,5 | 54,9 |
| **3** | 83,3 | 16,7 | 94,4 | 66,6 |
| **4** | 83,4 | 16,6 | 92,1 | 52,5 |
| **5** | 83,4 | 16,6 | 91,1 | 46,7 |
| **6** | 83,3 | 16,7 | 92,9 | 57,6 |
| **7** | 80,0 | 20,0 | 92,2 | 60,8 |
| **8** | 83,5 | 16,5 | 93,8 | 62,1 |
| **9** | 83,1 | 16,9 | 91,5 | 50,0 |
| **10** | 83,1 | 16,9 | 97,7 | 86,7 |
| **11** | 83,1 | 16,9 | 96,0 | 76,7 |
| **12** | 83,1 | 16,9 | 96,6 | 80,0 |

Es zeigte sich eine gute Anhaftungs-Ausbeute (Beladung des Produktes), die bis zu 80 % gehen kann durch die Verwendung der erfindungsgemäßen essbaren Fixierungsmittel in Partikelform.

## Patentansprüche

1. Verwendung von Partikeln mit einer durchschnittlichen Partikelgröße von 0.1 bis 50 mm, die aus einer Matrix bestehen, die ausschließlich die folgenden Komponenten umfasst:
(a) 0.001 Gew.-% bis 20 Gew.-% Aromastoffe,
(b) 40 Gew.-% bis 90 Gew.-% Stärkeabbauprodukte, Stärke oder modifizierte Stärke,
(c) 0 Gew.-% bis 10 Gew.-% Emulgatoren,
(d) 0.001 Gew.-% bis 20 Gew.-% Farbstoffe,
(e) 0 Gew.-% bis 10 Gew.-% Faserstoffe,
(f) 0 Gew.-% bis 5 Gew.-% Wasser,
(g) 0 Gew.-% bis 20 Gew.-% Gewürze, Gewürzextrakte und andere pulverförmige Lebensmittel,
mit den Maßgaben, dass
(a) sich die einzelnen Bestandteile der Zusammensetzung zu 100 Gew.-% addieren,
und
(b) die Partikel einen schmelzbaren Anteil aufweisen, der nicht unter 3 Gew.-% liegt, als Adhäsionssystem zum Aufbringen und Ankleben von Additiv-Partikeln auf die Oberfläche von Lebensmitteln.

2. Verwendung nach Anspruch 1, wobei die Partikel erhältlich sind durch Extrusion, Düsen-Coextrusion, Schmelzextrusion, Spray-Chilling, Pressagglomeration, Schmelzgießen, Pellettierung, Tablettierung oder sonstiger Granulationsprozesse.

3. Verwendung nach einem der Ansprüche 1 bis 2, wobei die Partikel aus einer extrudierten Schmelze hergestellt werden, in der Aroma- und / oder Riechstoffe oder Aroma- und / oder Riechstoffzusammensetzungen verteilt vorliegen.

4. Verwendung nach einem der Ansprüche 1 bis 3, wobei die Partikel aus gepressten Pulver, die als Trägermaterial Kohlenhydratverbindungen umfassen, welche mit weiteren Inhaltstoffe beladen sein können, bestehen, wobei das Granulat eine Partikelgröße von 0.3 bis 5 mm aufweist.

5. Verwendung nach einem der Ansprüche 1 bis 4, wobei die Partikel einen schmelzbaren Anteil aufweisen, der nicht unter 5 Gew.-% liegt.

6. Verwendung nach einem der Ansprüche 1 bis 5, wobei der Anteil an Stärke in einem Partikel nicht über 60 Gew.% liegt.

7. Verwendung nach einem der Ansprüche 1 bis 6, wobei die Partikel eine durchschnittliche Partikelgröße von 0,5 bis 5 mm aufweisen.

8. Verwendung nach einem der Ansprüche 1 bis 7 zur Fixierung von essbaren Partikeln auf Lebensmitteln.

9. Verfahren zur Herstellung eines Lebensmittel mit essbaren Partikeln als Adhäsionssystem zum Aufbringen und Ankleben von Additiv-Partikeln auf die Oberfläche von Lebensmitteln, umfassend
(i) Bereitstellung der Partikel wie beschrieben in Anspruch 1,
(ii) Erwärmen der Partikeln aus (i) auf eine Temperatur, bei der die Partikel anschmelzen,
(iii) Aufbringen der angeschmolzenen Partikeln aus (ii) auf das Lebensmittel, ggf. in Gegenwart von weiteren Gewürzen,
so dass ein Lebensmittel erhalten wird, an dem essbare (Additiv-) Partikel haften.

10. Verfahren nach Anspruch 11, wobei die Herstellung ein Einstufenprozeß ist, welcher kontinuierlich oder diskontinuierlich durchgeführt werden kann.

## Claims

1. Use of particles having an average particle size of from 0.1 to 50 mm, and having a matrix comprising the following components:
(a) 0.001 % b.w. to 20 % b.w. flavorings;
(b) 40 % b.w. to 90 % b.w. degradation products of starches, starches or modified starches;
(c) 0 % b.w. to 10% b.w. emulsifiers;
(d) 0.001 % b.w. to 20 % b.w. dyes;
(e) 0 % b.w. to 10 % b.w. fibres;
(f) 0 % b.w. to 5 % b.w. water;
(g) 0 % b.w. to 20 % b.w. spices, spice extracts or powdered food products;
on condition that
(a) the amounts of the matrix composition add to 100 % b.w.; and
(b) said particles have a meltable amount of at least 3 % b.w. ;
as an adhesion system for applying and adhering additive particles to the surface of food.

2. The use of claim 1, wherein said particles are obtainable by extrusion, nozzle-co extrusion, melt extrusion, spray-chilling, press agglomeration, melt moulding, pelletizing and tableting or other granulation processes.

3. The use according to one of claims 1 to 2, wherein the particles are produced from an extruded melt in which flavorings and / or fragrances or flavoring compositions and / or fragrance compositions are distributed.

4. The use according to one of claims 1 to 3, wherein the particles consist of pressed powder, which comprise as carrier material carbohydrate compounds, which may be loaded with other ingredients, wherein the granules have a particle size of 0.3 to 5 mm.

5. The use according to one of claims 1 to 4, wherein said particles have a meltable amount of at least 5 % b.w.

6. The use according to any one of claims 1 to 5, wherein the amount of starch in a particle is not more than 60 % b.w.

7. The use according to one of claims 1 to 6, wherein said particles have an average particle size of from 0.1 to 0 mm

8. The use according to one of claims 1 to 7 for fixation of edible particles on food.

9. A method for producing an food product with edible particles as an adhesion system for applying and adhering additive particles to the surface of foods, comprising
(i) providing the particles as described in claim 1,
(ii) heating the particles from (i) to a temperature at which the particles melt,
(iii) applying the melted particles of (ii) to the food, optionally in the presence of further spices,

10. The method according to claim 9, wherein the method is a one-step process which can be carried out continuously or batchwise.

## Revendications

1. Utilisation de particules ayant une taille de particule moyenne de 0,1 à 50 mm, qui sont constituées par une matrice qui comprend exclusivement les composants suivants:
(a) 0,001 % en poids à 20 % en poids d'arômes,
(b) 40 % en poids à 90 % en poids de produits de décomposition d'amidon, d'amidon ou d'amidon modifié,
(c) 0 % en poids à 10 % en poids d'émulsifiants,
(d) 0,001 % en poids à 20 % en poids de colorants,
(e) 0 % en poids à 10 % en poids de fibres,
(f) 0 % en poids à 5 % en poids d'eau,
(g) 0 % en poids à 20 % en poids d'épices, d'extraits d'épices et d'autres produits alimentaires en poudre,
à condition que
(a) la somme des constituants individuels de la composition soit de 100 % en poids et
(b) les particules présentent une proportion fusible qui n'est pas inférieure à 3 % en poids,
en tant que système d'adhésion pour l'application et le collage de particules d'additif sur la surface de produits alimentaires.

2. Utilisation selon la revendication 1, dans laquelle les particules peuvent être obtenues par extrusion, co-extrusion en buses, extrusion à l'état fondu, refroidissement par pulvérisation, agglomération par pressage, coulée à l'état fondu, agglomération en boulettes, pastillage ou d'autres procédés de granulation.

3. Utilisation selon l'une quelconque des revendications 1 à 2, dans laquelle les particules sont fabriquées à partir d'une masse fondue extrudée dans laquelle des arômes et/ou des parfums ou des compositions d'arômes et/ou de parfums sont répartis.

4. Utilisation selon l'une quelconque des revendications 1 à 3, dans laquelle les particules sont constituées par des poudres comprimées, qui comprennent des composés de glucides en tant que matériau support, qui peuvent être chargées avec d'autres composants, le granulat présentant une taille de particule de 0,3 à 5 mm.

5. Utilisation selon l'une quelconque des revendications 1 à 4, dans laquelle les particules présentent une proportion fusible qui n'est pas inférieure à 5 % en poids.

6. Utilisation selon l'une quelconque des revendications 1 à 5, dans laquelle la proportion d'amidon dans une particule n'est pas supérieure à 60 % en poids.

7. Utilisation selon l'une quelconque des revendications 1 à 6, dans laquelle les particules présentent une taille de particule moyenne de 0,5 à 5 mm.

8. Utilisation selon l'une quelconque des revendications 1 à 7 pour la fixation de particules comestibles sur des produits alimentaires.

9. Procédé de fabrication d'un produit alimentaire comprenant des particules comestibles en tant que système d'adhésion pour l'application et le collage de particules d'additif sur la surface de produits alimentaire, comprenant :
(i) la préparation des particules telles que décrites dans la revendication 1,
(ii) le chauffage des particules de (i) à une température à laquelle les particules fondent,
(iii) l'application des particules fondues de (ii) sur le produit alimentaire, éventuellement en présence d'autres épices,
de manière à obtenir un produit alimentaire sur lequel des particules (d'additif) comestibles adhèrent.

10. Procédé selon la revendication 9, dans lequel la fabrication est un procédé à une étape, qui peut être réalisé de manière continue ou discontinue.
